# EUROPEAN PATENT APPLICATION

(11) **EP 4 491 026 A1**
(43) Date of publication of application: **15.01.2025**
(21) Application number: 22931145.1
(22) Date of filing: 11.07.2022
(51) Int. Cl.: A01N 59/06, A01N 59/00, A01N 59/20, C05D 1/00, C05D 1/04, C05D 3/00, C05D 3/02, C05D 5/00, C05D 9/02

(54) **FORMULATION AND METHOD FOR OBTAINING NUTRITIONAL ACIDS FROM PLANTS**

(30) Priority: 09.03.2022 MX 2022002905
(71) Applicant: Muñoz Morate, Enrique, 80296 Culiacán (MX)
(72) Inventor: Muñoz Morate, Enrique, 80296 Culiacán (MX)
(74) Representative: Sánchez Margareto, Carolina
(86) International application number: PCT/MX2022/050058
(87) International publication number: WO 2023/172121

(57) **Abstract**

The present invention relates to a liquid or solid fertiliser composition and to a method for obtaining the same, wherein the main product includes acetates of potassium, calcium, magnesium and microelements such as iron, zinc, manganese and copper, obtained from the cold reaction of the carbonate of the element diluted in water, with the addition of acetic acid or vinegar in a reactor with continuous stirring and with recirculation of the carbon dioxide obtained during the reaction. The fertiliser obtained substantially improves nutrient absorption in plants where it is applied.

The invention relates to a new product for agricultural use, which changes maximum crop yield with minimal environmental impact, allows the doses of fertilising units providing potassium, calcium, magnesium, iron, zinc, manganese and copper to be reduced, and can be incorporated into the soil by means of fertilisation, using sprinkler irrigation or drip irrigation.

## Description

### FIELD OF THE INVENTION

The present invention relates to a mineral fertiliser that provides micronutrients to the soil and to plants, which mainly uses acetates of potassium, calcium, magnesium, and microelements such as iron, zinc, manganese and copper, wherein fertilisers are obtained by means of a highly efficient sustainable process.

### BACKGROUND OF THE INVENTION

The application of fertilisers to the soil, or to the leaves of plants, is currently a highly recommended practice in agriculture in order to maintain adequate mineral nutrition in plants.

In particular, the deficiency of nutrients such as potassium, calcium and magnesium is explained below:

### POTASSIUM

Potassium deficiency causes low yield and poor firmness in plants, poor quality, short shelf-life of the harvested product, increased need for water, blocking of protein synthesis, little resistance to pests, diseases and frost.

K+ deficiency initially manifests itself as necrosis that develops in plants first on the edges of the leaves and between the leaf veins, and later it develops in the basal area of the leaf. Due to the vital role of K+ in plant cells, plants with a significant deficiency of this nutrient end up showing reduced growth, especially in the aerial part. (Amtmann et al, 2004)

The main effect of potassium on the quality of the fruits is the increase in their size, in addition to stimulating the formation of desirable components of the fruit such as sugars. Potassium-demanding plants produce large amounts of sugars (sugar cane, beet, etc.).

In a general sense, the effect of potassium fertilisation, both on citrus fruits and on other crops, is seen in the increases in yield and improvements in the quality of the fruits or products obtained (Piessis and Koen, 1989).

### CALCIUM

Calcium is a necessary element for multiple physiological functions of the plant, aiding the production of high quality fruits; for example, calcium deficiency in the apple tree causes the appearance of brownish mottling on the pericarp of the fruit, which is a disease known as bitter pit and which produces the deterioration of the pulp texture. Poor calcium nutrition in cruciferous crops also causes burns on the edges of leaves, which have a blackish colour (Tip Burn).

There are several factors that affect the absorption and mobility of calcium:
- High temperatures. Due to a reduction in transpiration.
- High relative humidity. Due to a reduction in transpiration, as the atmosphere is saturated with water, the water gradient is reduced, reducing transpiration.
- Water deficit. Due to lower water absorption.
- Oscillating radiation. Due to a reduction in transpiration due to alterations in the stomata and in photosynthesis.
- Antagonisms (Ca-Mg-K-NH₄). Due to a nutritional imbalance, these ions compete with each other to be absorbed and when they are not in the appropriate concentrations, alterations in their absorption occur.
- Excess vigour or strong vegetative imbalance of the plant. The leaves have a greater transpiration capacity than the fruits; this increases the flow of calcium to the leaves and reduces the flow to the fruits, which generally have low transpiration.
- Low availability. There are different reasons; for example, when there are high levels of phosphates in the soil, calcium precipitates (it is not water-soluble), meaning it is not available to the plant.

Calcium is not very mobile and tends to accumulate in old organs. Old leaves may have normal concentrations of calcium, while young leaves, fruits or other organs may exhibit levels below normal. The distribution of calcium that penetrates the fruit is quite irregular, since most of it remains immobilised as oxalate in the phloem of the petiole, in the insertion area with the fruit.

### MAGNESIUM

Magnesium is one of the essential elements that is often overlooked in modern fertilisation; despite its importance as a structural component of chlorophyll, it intervenes in assimilation, and from CO₂ and H₂O, it intervenes in more complex transformations and interrelationships with carbohydrates, lipids and proteins.

Magnesium (Mg) plays an important role in phosphorus (P) metabolism in plants and, as a result, indirectly in the synthesis of proteins and lipids. Mg++ ions appear to be specific activators of certain enzyme systems, especially those related to phosphorylation processes. The Mg++ ion forms a bridge between the pyrophosphate structure of ATP and ADP and the enzyme molecule (Hengel and Kirby, 1979).

Mg is absorbed by plants as an Mg++ ion, absorption takes place in the soil or possibly as an exchange, and the amount of Mg absorbed may depend on factors such as: the total amount of Mg present in the soil, the type of clay, the nature of other exchange ions and the extraction power of the crop.

The Foundation for Agronomic Research and Potash and Phosphate Institute of Canada (1988) mentions that Mg helps in phosphate metabolism, plant respiration and the activation of numerous enzyme systems. The same source states that the imbalance between calcium and magnesium in the soil accentuates magnesium deficiency. When the Ca/Mg ratio becomes very high, plants absorb less magnesium; magnesium deficiency can also come from high doses of potassium or nitrogen in the form of ammonium. It also shows that magnesium deficiencies occur more frequently in coarse-textured soils and acidic soils developed under high rainfall. Mg++ deficiencies may occur in sandy soils or in soils with high ammonium (NH4+) content or high potassium (K) doses.

Symptoms of magnesium deficiency appear first on the old leaves of the plant, due to the high mobility of the element in that plant. They are initially exhibited as a slight yellowish discolouration, but the veins remain green. In some crops, as the deficiency progresses, a reddish-purple colour develops, but the veins are still green.

These symptoms of magnesium deficiency result in the development of chlorosis, which is not surprising since it is a component of chlorophyll.

### COPPER, IRON, MANGANESE AND ZINC

Micronutrient deficiencies in agricultural crops must be corrected before they appear; micronutrients mixed with a nitrogen source should preferably be applied because the results are better. Micronutrients play an important role in cell division, fruit formation, carbohydrate metabolism, protein, etc. In particular, the deficiency of a micronutrient is explained below:

### IRON

Iron deficiency in micronutrients in agricultural crops is clearly seen in calcareous soils, mainly in citrus fruits, grains, beans, fruits, dry fruits and grasses. Its low amount in the soil has low chlorophyll production.

The most important symptom of iron deficiency will be a visual change in the plant. Leaf chlorosis is a yellowing of the leaves. The yellowing associated with iron deficiency usually begins at the ends and progresses inward, leaving green streaks. This pattern of change is key in determining an iron deficiency. Another shortage produces colour changes that affect the leaves and veins, and the discolouration occurs more uniformly and almost all at once. Chlorosis will first attack new growth, and if it is not treated it will move to the old leaves.

Other more common symptoms of iron deficiency are poor growth and premature leaf loss. These are also common symptoms of other diseases, and they are the direct result of poor nutrition. Likewise, these problems can occur when other minerals are low, or if excess watering has occurred. When these symptoms occur along with leaf chlorosis, a diagnosis of iron deficiency can be made.

An iron deficiency is rarely the result of a lack of iron in the soil. In contrast, it is more commonly a result of poor iron absorption caused by difficult soil conditions. Among the most common problems are soil pH that is too high, excessive clay or phosphorus in the soil, or simply excess water and compaction. Decreasing phosphorus by using a low-phosphorus fertiliser will provide a better balance in the soil and help improve plant uptake of iron.

If the pH of the substrate exceeds 6.5, iron becomes insoluble, thus hindering proper absorption by the plant and resulting in deficiencies. The pH of the substrate can be reduced by acidifying the irrigation water or using a fertiliser with a potentially high acidity. Since it may take a few weeks to correct the problem, chelated iron can be used to accelerate plant greening.

### ZINC

Zinc (Zn) is one of the essential micronutrients for plants; although it is necessary in small quantities, it is crucial for its development.

Zinc deficiency is probably the most common micronutrient deficiency in crops worldwide, leading to significant losses in crop yields.

Inadequate supplies of zinc may result in a significant reduction in crop yield and quality. In fact, yield may even be reduced by more than 20% before visual symptoms of deficiency occur.

In plants, zinc is a key component of many enzymes and proteins and plays an important role in a wide range of processes, such as the production of the growth hormone and the elongation of internodes.

The mobility of zinc in plants varies depending on its availability in the soil. When zinc availability is adequate, it is easily transported from mature leaves to younger leaves, while when zinc is deficient, the movement of zinc from more mature leaves to younger ones is delayed.

Zinc deficiencies will initially appear in the middle leaves. This deficiency includes one or some of the following symptoms: A delay in growth - reduction in height, chlorosis and brown spots on the upper leaves, mainly.

In dicotyledons, small, rosette leaves with tips that are often white are observed and the general growth of the plant is delayed.

Wheat, sorghum and corn present typical whitish-yellow spots that later become stripes along the veins and may exhibit a reddish colour like spots.

In fruit trees, twisting of the leaves (rosette) occurs due to short internodes. Branch growth is inhibited, young shoots die and leaves fall prematurely.

The zinc content in uncontaminated soils is between 10 - 80 mg kg-1. In sandy soils, the zinc content is lower than in loamy soils. The zinc available in the soil solution is adsorbed and fixed especially by the organic matter of the soil, in addition to being adsorbed by iron oxides, aluminium and manganese or fixed in the lattice of clay minerals and silicates. Additional zinc fixation occurs when the content of sulphates, phosphates and mainly acetates in the soil solution is high.

### MANGANESE

Both manganese and iron are important in photosynthesis for the formation of chlorophyll in oxidation-reduction processes, in respiration and participation in enzymatic mechanisms. Manganese is actively absorbed by the plant as Mn+². If the soil-root environment has high concentrations of ionic forms such as potassium, calcium, magnesium, copper and zinc, its absorption rate decreases.

One of its main functions is to act as an electron donor for activated chlorophyll in the synthesis of chlorophyll and in the formation, multiplication and function of chloroplasts. It participates in oxidation-reduction processes, decarboxylation reactions and hydrolysis. It is required in enzymatic mechanisms for the reactions involved in the citric acid cycle. It acts as an enzyme activator in respiration and nitrogen metabolism.

Manganese deficiency manifests itself in young leaves, since it is an immobile element in the plant. The symptoms are very similar to iron deficiency, with chlorosis in young leaves and some plants may exhibit chlorotic mottling.

### COPPER

Copper is one of the micronutrients in agricultural crops that is most necessary for chlorophyll formation. High temperatures and high humidity levels are unfavourable for the release of copper by the organic matter of the soil.

Copper reacts with the organic matter to compounds that are not immediately available to plants. In soils with high organic matter content, copper deficiencies increase and fertilisation must be carried out annually.

An incompatibility exists when copper sources are mixed with fertilisers. Insoluble forms of copper may improve their solubility when they incorporate granulated fertilisers (NPK in grain). Ammonium phosphates present in liquid fertilisers react with copper sulphate to form insoluble compounds.

There are different formulations to apply copper to crops:
- Copper sulphate: Between 20% to 25% copper metal. Given its structure, it is the most persistent copper, but also the most phytotoxic, since the particle size is very small and can be entrained more easily into the interior of plant cells.
- Copper oxychloride: 50% copper metal, it has little adhesion and persistence and, therefore, is less phytotoxic.
- Cuprous oxide: It is copper that is red in colour, has between 50 and 80% copper metal, good efficiency and high persistence. It has greater resistance to washing.
- Copper hydroxide: 50% copper metal. Quick release of copper ions, it has a shock effect and good efficacy but low persistence. There are other compounds on the market that contain copper in low percentages and that are chelated (the metal is wrapped in an organic molecule). These products are sold as correctors of copper deficiencies in crops, and many of them are products authorised for organic production.

In the state of the art, documents have been found that disclose various fertiliser compositions that provide potassium, calcium, magnesium, iron, zinc, manganese and copper to plants, but not in the form of acetates, like the present invention.

The closest invention found in the state of the art is publication WO2012/175759 A1, titled with the name of fertiliser compound for increasing the calcium content of plants and improving the preservation thereof. The fertiliser compound of said invention consists of a liquid preparation, with a high calcium content, completed by lignosulphonates and low molecular weight organic acids and enhanced by the substance menadione sodium bisulphite. The liquid formulation is water-soluble and can be used through roots for various types of irrigation.

According to the review of the state of the art, efforts to supply calcium in a fertiliser have increased due to the complication represented by the poor solubility of calcium in water, which in liquid fertilisers can cause clogging problems in irrigation systems, for example, in drip irrigation.

United States patents, US 5395418, US 5171349, US 6312493 and US 5997602, present proposals that aim to solve this problem.

In particular, patent US 5997602 describes a fertiliser in aqueous suspension that has a pH in the range of 0.5 to 2, in other words, formulations with high acidity are presented.

Moreover, patent US 5851260 provides fertilisers in suspension with a pH in the range of 2 to 7 and a particle size less than 50 microns, preferably from 0.2 to 20 microns.

The invention WO 2012/175759 A1, which relates to a formulation of a fertiliser compound suitable for plants to increase their calcium absorption capacity, is mainly composed of calcium nitrate (45.0-62.0%) and calcium lignosulphonate (8.0-14.0%).

In said invention, calcium nitrate is the main source of calcium in the formulation and amino acids are the components that stimulate the penetration of calcium through the absorbent roots of the plant. However, there is a problem with this invention, since it is widely known that calcium nitrate is the predominant source of calcium fertilisation, and that it is a salt that presents contamination in the form of the complex (6(N-03))2Ca), N03NH4, and the ammonium that limits the absorption of the calcium ion by the plant. Unlike the present invention based on calcium acetate, which is free of nitrates, sulphates and chlorides, which has, among other advantages, a reference to an acidic pH.

Japanese invention with number PCT/JP2000/007419 provides the use of potassium chloride for use as a fertiliser, like international patent WO97/21656.

In Chinese patent CN101591120 SB, which relates to a drug - fertiliser mixture for preventing and controlling viral diseases of crops, said mixture mainly contains guanidine hydrochloride, calcium, manganese and copper salts. The product may contain potassium acetate as an additive.

The international publication WO2013/076345 A1 relates to a fertiliser and method for obtaining same from a mineral source that is rich in calcium oxides, magnesium and total carbonates.

The invention PCT/MX2007/000157 relates to an organic and mineral liquid fertiliser where aloe vera and humic acid are used as a source of organic matter, to which the micronutrients of iron, zinc, copper, manganese, boron, calcium and magnesium have been added in the form of soluble compounds, in addition to a chelating agent and a surfactant to make nutrients more assimilable for crops.

The invention consists of an organic-mineral liquid fertiliser, which organic base is aloe vera extract and/or humic acid; and the mineral is made up of various added salts so that the fertiliser contains the essential micronutrients for all types of soil (iron, zinc, copper, manganese, boron, calcium and magnesium). Furthermore, it contains a chelating agent and a surfactant to improve the assimilation of nutrients by crops.

The invention WO 2004035507 A1 consists of a granulated fertiliser that contains iron (11 to 13%), zinc (3 to 9%), manganese (0.1 to 2.5%), copper (0.5 to 0.7), in the form of sulphates, as well as ammonium molybdate (0 to 0.1%) and a Kaolinite clay (45 to 57%), or a mixture thereof in any proportion. All percentages by weight are based on the total weight of the fertiliser. Patent application WO 2012/129487 A2: "Fertilizer composition incorporating fibrous material for enhanced particle integrity", protects a fertiliser composition and a method for producing same. The fertiliser composition comprises: (a) a phosphate-based material, (b) at least one micronutrient and one secondary nutrient, (c) and a fibrous material (paper or pulp sludge) that allows increasing granular strength, preventing wear and dust formation during storage, transport and handling.

The application WO2010130276 A1: "Method and device for producing solid-like, biodegradable fertilizer or soil-loosening agents from municipal and/or industrial sludge", protects a method for producing a solid biodegradable fertiliser from sludge from municipal waste, from the food industry and/or from the paper industry, in addition to the addition of alkaline substances.

The low efficiency of quick-release fertilisers forces a disproportionate use relative to the necessary fraction that can be assimilated by the plant. This leads to an increase in the production costs of the agricultural operation and a greater environmental impact, due to transfer of the soluble materials by drainage to the subsoil and to the water tables, in other words, to groundwater reserves. This leaching effect moves the soluble components of the fertiliser away from the space of root action of the plant, thus decreasing its effectiveness.

Very diverse solutions to the quick release of micronutrients from fertilisers have been proposed in recent decades. On the one hand, products have been obtained that, in the manufacturing or mixing process thereof, are incorporated or coated with organic products that are insoluble in water, which act as a barrier to prevent the quick release of the active components.

These organic products can be very diverse such as, for example, epoxy resin as described in patents EP 0716057, US 3259482 or US 3264088 (with excessively high curing times); oil-aqueous emulsion coatings, commonly waxes, as described in patent EP 0592579; coatings with isocyanates and polyisocyanates, as described in patent EP 0948474. All these organic coatings, despite all of them being biodegradable as a premise, are products external to the soil-plant system. Furthermore, due to the concept of use thereof, the inclusion of this product in the fertiliser reduces the amount of active component therein, where, sometimes due to the weather where it will be used, due to mechanical resistance of the granule, etc., they do not even reach 50% of components that can be assimilated by the plant.

### OBJECT OF THE INVENTION

An object of the present invention to provide fertiliser formulations that provide potassium, calcium, magnesium, iron, zinc, manganese and copper.

Another object of the invention is to propose a fertiliser capable of increasing the absorption capacity of potassium, calcium, magnesium, iron, zinc, manganese and copper by the plants to which it is applied.

Another object is to provide a fertiliser that provides micronutrients and maintains stable long-term solutions, in order to not form precipitates that could clog the application equipment.

Another object of the present invention is a method for obtaining a fertiliser composition or product that combines certain temperature and pH conditions, which prevent the denaturation of the active ingredients during their processing until obtaining the fertiliser product of the present invention.

### BRIEF DESCRIPTION OF THE FIGURES

The features and advantages of the examples in the present disclosure will become apparent with reference to the following detailed description and drawings, in which similar reference numbers correspond to similar, although perhaps not identical, components:
Figure 1 is a correlation graph of Ca content vs Mg content in Blueberry.
Figure 2 is a correlation graph of Ca content vs Mn content in Blueberry.
Figure 3 is a correlation graph of Mg content vs Mn content in Blueberry.
Figure 4 is a correlation graph of K content vs Fe content in Blueberry.
Figure 5 is a correlation graph of Zn content vs Fe content in Blueberry.

### DESCRIPTION OF THE INVENTION

The present invention describes fertilisers based on acetates of potassium, calcium, magnesium, iron, zinc and manganese, referring to highly efficient fertilisers that are defined as products with physicochemical features that minimise the potential for nutrient losses to the environment, without immobilisation in soils and agricultural substrates, with the particularity that, in addition to not undergoing chemical dissociation by irrigation water, they are quickly absorbed by the symplast and by the apoplast, passing the root Casparian strip inside the vascular xylem and transferring mainly to leaf organs and fruits.

An object of the present invention is to provide fertiliser formulations that provide potassium, calcium, magnesium, iron, zinc, manganese and copper with improved efficiency in their method of obtaining and that maintain the soil in a stable and efficient manner with nutritional content.

The present invention relates to a novel product for use in agriculture, which combines maximum crop yield with minimal environmental impact, allows the doses of fertilising units to be reduced and the soil can be incorporated by means of fertigation, using sprinkler irrigation or drip irrigation.

In a preferred embodiment, the fertiliser described above may contain the following components:

| | |
|---|---|
| • Potassium acetate ------------- | 1.0 to 40.0%; |
| • Calcium acetate --------------- | 1.0 to 40.0%; |
| • Magnesium acetate ---------- | 1.0 to 40.0%; |
| • Iron acetate ---------------- | 1.0 to 40.0%; |
| • Zinc acetate -------------------- | 1.0 to 40.0%; |
| • Manganese acetate ------ | 1.0 to 40.0%; |
| • Copper acetate ----------------- | 1.0 to 40.0%; |
| • Potassium bicarbonate --------- | 0.01 to 0.05%; |
| • Calcium bicarbonate ----------- | 0.01 to 0.05%; |
| • Magnesium bicarbonate ------ | 0.01 to 0.05%; |
| • Iron bicarbonate ----------- | 0.01 to 0.05%; |
| • Zinc bicarbonate -------------- | 0.01 to 0.05%; |
| • Manganese bicarbonate ---- | 0.01 to 0.05%; |
| • Copper bicarbonate ------------ | 0.01 to 0.05%; |
| • Acetic acid ----------------------- | 0.1 to 1.0%; |
| • Water ---------------------------------- | 81.0 to 83.5%. |

### POTASSIUM

In the fertiliser of the present invention, potassium reaches the roots of the plants by transport in the soil solution and its concentration determines how much potassium reaches the roots at a given time.

It is desirable that the fertiliser of the present invention provides potassium and maintains good long-term stability in the stock solutions, in order to not form precipitates that could clog the spraying equipment, dispensers and irrigation lines.

In a preferred embodiment, the fertiliser described above may contain the following components:

| | |
|---|---|
| • Potassium acetate---------- | 10.0 to 40.0% |
| • Potassium bicarbonate ------ | 0.05 to 0.10% |
| • Acetic acid------------------- | 0.1 to 1.0% |
| • Water------------------------------ | 58.0 to 83.5% |

The composition of the present invention is advantageous if it is considered that potassium (K) is one of the essential elements in plants, it is generally assimilated in the form of potassium acetate and in movement in plants, and it is found mainly in the cytoplasm and cell vacuoles. Antagonisms

Antagonism consists of the fact that an increase above a certain level in the concentration of one element reduces the absorption of another. These antagonisms depend, among other factors, on the size of the hydrated ion and its charge. Examples: NH4+, /K+, Ca2+/Mg2+ and K+, Cl-/NO3-. Perhaps the most worrying element in limestone soils is Ca, which is an antagonist with a multitude of elements. It is also observed that an excess of nitrogen fertiliser prevents the correct assimilation of K and copper.

However, the present invention, as shown in figures 1 to 5, exhibits synergy of these elements.
Ca²⁺/Mg²⁺ = 1.55 mEq/L
K²⁺/Ca²⁺ = 0.17 mEq/L
K²⁺/Mg²⁺ = 0.25 mEq/L

As it is positively charged, potassium is a stabiliser of negatively charged molecules, such as nucleic acids and proteins.

K+ exhibits high mobility in plants, translocating from the root to the aerial part of some leaves to others, but it accumulates in the cellular vacuole, allowing movements of the plant, such as the opening and closing of stomata and the movement of leaves.

In the composition of the present invention, K+ is also considered a compatible osmolyte that contributes to maintaining the plant's water status, which is fundamental in compensating most abiotic stresses.

K+ is also necessary to complete many of the plant metabolic reactions due to its ability to activate numerous enzymes. One of the important factors that regulate the nutritional status relationships of K+ is the chemical form in which nitrogen (N) is found in the medium, either predominantly as NH+ or as NOs-.

Both ions, K+ and NH₄+, have a positive charge and other similarities that make both cations compete, and K+ nutrition is affected by high NH₄+, and on the contrary, by increasing the external concentration of K+, the toxic effects of NH₄+ can be reduced.

Accordingly, an objective of the present invention is to provide K+ without the presence of NH₄+, to meet the demand of the plant. Ammonium and potassium in phosphate solution alter pH and do not allow adequate solubility for mineral salt ions, giving rise to the precipitation of said mineral salts in the reserve solution, and may clog the application equipment.

### CALCIUM

The fertiliser of the present invention allows incorporating calcium acetate into the soil and facilitates the mobilisation of other elements such as potassium. Calcium ions (Ca+2) are larger than potassium ions (K+), so when calcium enters the soil solution, it favours the release of K+ into said soil solution, making it available to the plant.

The calcium source from calcium acetate prevents the permanence of anionic moieties that could generate unwanted salts and maintains the soil with an acidic pH.

In a preferred embodiment, the fertiliser described above may contain the following components:

| | |
|---|---|
| • Calcium acetate---------- | 10.0 to 40.0% |
| • Calcium bicarbonate ------- | 0.01 to 0.05% |
| • Acetic acid---------- | 0.5 to 1.0% |
| • Water---------- | 58.0 to 83.5% |

The present invention presents the challenge of using a fertiliser with greater efficiency and an integrated production management system.

A fertiliser is proposed that is intended to increase the calcium content of the plant by virtue of the fact that the formulation is absorbed by the roots and with hardly any adsorption by the humic-clay complexes, all of which have an electronegative charge and are easy to perform the translocation of calcium in the plant.

Plants take calcium from the soil in ionic form through their roots and the absorption thereof depends on exogenous and endogenous factors. Among the former, those worth noting are the ones in the soil; water content, pH, degree of aeration, temperature, concentration of Ca++ and proportion of other elements.

Among the endogenous factors, it is worth highlighting those related to the cell wall, respiration, photosynthesis, transpiration and specific effects of other ions.

From the fertiliser of the present invention, calcium uptake and its distribution through the different organs of a plant increases as the transpiration rate increases. On the contrary, inhibition of this transpiration decreases calcium translocation, especially to the apical shoots and to the fruits, although it can also be carried out to the rest of the plant.

Calcium is transported almost exclusively by the xylem vessels, while potassium and magnesium are transported mainly by the phloem.

### MAGNESIUM

An object of the present invention is to provide fertiliser formulations that provide magnesium with improved efficiency in their method of obtaining and that maintain the soil in a stable and efficient manner with nutritional content.

It is desirable that the fertiliser of the present invention provides magnesium and maintains stable long-term solutions, in order to not form precipitates that could clog the application equipment.

In a preferred embodiment, the fertiliser described above may contain the following components:

| | |
|---|---|
| • Magnesium acetate ------- | 10.0 to 40.0% |
| • Magnesium bicarbonate ------- | 0.01 to 0.05% |
| • Acetic acid ------- | 0.5 to 1.0% |
| • Water ------ | 58.0 to 83.5% |

### IRON

Plants use several mechanisms to absorb iron. One of them is the chelation mechanism, where the plant excretes compounds called siderophores, which form a complex with iron and increase its solubility. Another mechanism involves the extrusion of protons (H+) and reducing compounds by the roots of the plant, to reduce pH in the root zone. The result is an increase in iron solubility.

In this sense, the choice of the form of nitrogen fertilisers is important. Ammoniacal nitrogen (NH₄+) increases the extrusion of protons by the roots, pH decreases, and iron is better absorbed by the plant.

Nitric nitrogen (NOs-) increases the extrusion of hydroxide ions, which increase the pH in the root zone and counteract efficient iron absorption.

Young lateral roots are more active in iron absorption and, therefore, it is imperative to maintain a healthy and active root system. Any factor that interferes with root development interferes with iron absorption.

Iron can be applied as ferrous sulphate or in a chelated form; for example, ferrous sulphate (FeSO4) contains approximately 20% iron and it is a fertiliser mainly used for foliar spraying.

Its application at pH higher than 7.0 is not recommended, since iron is quickly transformed into Fe3+ and precipitated as one of the iron oxides.

Iron chelates are compounds that stabilise metal ions and protect them from oxidation and precipitation. These compounds adhere or stick to ferric iron and this phytochelate-Fe(III) complex is soluble, due to the unique characteristics of these chelating agents. Once the compound has been formed, it is soluble and mobile in the soil.

Iron chelates consist of at least three components: Fe3+ ions, a complex such as EDTA, DTPA, EDDHA, amino acids, humic/fulvic acids, citrate, sodium ions (Na+) or ammonium ions (NH4+).

Different chelates vary in their strength and stability at different pH levels. They also vary in their susceptibility to iron displacement by competitive ions, as presented by the fertiliser of the invention.

As the preferred embodiment in iron content, the fertiliser described above may contain the following components:
- Iron acetate 10.0 to 40.0%
- Iron bicarbonate 0.01 to 0.05%
- Acetic acid 0.5 to 1.0%
- Water 58.0 to 83.5%

### ZINC

Zinc availability is strongly influenced by pH and its total content in the soil. The amount of exchangeable zinc decreases with the increase in pH and it is very low as of pH 6.0. With the presence of zinc acetates, the affinity thereof increases considerably against iron and manganese oxides.

In the fertiliser of the present invention, the plant absorbs zinc ions from the soil solution mainly as Zn²⁺ and zinc hydroxide (at high pH). Zinc supply to the plant is normally safe in soils with a pH < 6, since the availability of zinc increases with a decrease in pH. However, zinc absorption is reduced at low temperatures and in the presence of metabolic inhibitors.

Zinc absorption by the root is influenced by other elements, such as calcium, magnesium, iron, manganese and copper (antagonism). However, the most documented absorption antagonism is that which occurs in situations of excess phosphorus.

Zinc mobility in the plant is very low. In the old leaves, it is quite immobile and translocates with difficulty to growing tissues, especially in plants with a deficiency. When zinc intake is high, it usually accumulates in the root tissues.

It is an essential component of the RNA polymerase enzyme responsible for catalysing RNA synthesis, thus influencing protein formation. As a component of enzymes, zinc catalyses the synthesis of fructose-6-phosphate, which is an important metabolite of glycolysis and, therefore, of photosynthesis.

It is essential for ribosome stability. It is required in the synthesis of indole-3 acetic acid from tryptophan, which is important to regulate plant growth, and it also specifically activates the dehydrogenated glutamic enzyme that is related to the assimilation of ammonium (NH4).

As the preferred embodiment in zinc content, the fertiliser described above may contain the following components:

| | |
|---|---|
| • Zinc acetate ---------- | 10.0 to 40.0%; |
| • Zinc bicarbonate ----- | 0.01 to 0.05%; |
| • Acetic acid -------- | 0.5 to 1.0%; |
| • Water ------- | 58.0 to 83.5%. |

### MANGANESE

The contribution of manganese by the fertiliser of the present invention produces membrane permeability, an increase in nutrient absorption and consequently an increase in harvests.

As the preferred embodiment in manganese content, the fertiliser described above may contain the following components:

| | |
|---|---|
| • Manganese acetate ----- | 10.0 to 40.0% |
| • Manganese bicarbonate ----- | 0.01 to 0.05% |
| • Acetic acid ------- | 0.5 to 1.0% |
| • Water -------- | 58.0 to 83.5% |

### COPPER

In the present invention, Cu absorption is carried out as copper acetate by the roots of the plants, as well as soluble copper complexes. Cu is necessary in numerous biochemical processes such as redox reactions that generally depend on the change in valence of the ion. In addition, it is also part of several enzymes that influence photosynthesis and carbohydrate and nitrogen metabolism.

Cu a traditional contact protector, its application forms a protective surface layer that prevents fungal spores and
bacteria from being established and developing. It penetrates into plant tissues. Its effect is preventive, it does not cure the affected parts of plants and it does not prevent the development of the disease once the fungus has established itself in the plant.

It has a wide range of activity since it attacks a good number of different fungi and has good persistence; by being mineral, non-biodegradable particles in the short term, they can remain active much longer. Copper acetate does penetrate and has mobility by means of the florem and the xylem. Copper formulations are recommended for preventive fungicide treatments of anthracnose, alternariosis, moniliasis and other fungi, except for powdery mildew.

In a preferred embodiment in copper content, the fertiliser described above may contain the following components:

| | |
|---|---|
| • Copper acetate ------ | 10.0 to 40.0% |
| • Copper bicarbonate ------ | 0.5 to 1.0% |
| • Acetic acid ------ | 0.5 to 1.0% |
| • Water ------ | 58.0 to 83.5% |

The method for obtaining the liquid fertiliser described in the present invention includes the following steps:
I. Mix natural stone of: potassium, and/or calcium, and/or iron, and/or zinc, and/or manganese and/or copper; and/or carbonate of: potassium, and/or calcium, and/or iron, and/or zinc, and/or manganese and/or copper; and/or oxysalts of: potassium, and/or calcium, and/or iron, and/or zinc, and/or manganese and/or copper, with water gradually, with continuous stirring, preferably at 400 RPM, cooling between 5 and 8°C. This operation can take up to 12 hours.
II. Add acetic acid (CH3COOH) or vinegar to the previous mixture, uniformly, preferably as droplets, with continuous stirring in order to achieve the reaction between the compounds to form acetate of potassium, and/or calcium, and/or iron, and/or zinc, and/or manganese and/or copper, and also to obtain carbon dioxide (CO₂). Preferably cool the mixture to between 5 and 8°C. Acetic acid or vinegar will be added until a pH between 4.6 and 4.8, preferably 4.7, is obtained.
III. Recirculate the carbon dioxide (CO₂) formed by the reaction between carbonate of potassium, and/or calcium, and/or magnesium, and/or iron, and/or zinc, and/or manganese, and/or copper with acetic acid or vinegar. The carbon dioxide produced is recirculated and incorporated into the reaction to form bicarbonate and thus increase the richness of the acetate.
IV. Decant or centrifuge the mixture obtained after the reaction for 24 hours. In this step, the carbonate of potassium, and/or calcium, and/or magnesium, and/or iron, and/or zinc, and/or manganese, and/or copper that did not react will precipitate to the bottom of the reactor and the acetate(s) obtained will remain in the form of a solution. According to the preferred method, the solution obtained is subject to the action of a vertical centrifuge to separate the suspended solids.
V. Collect the obtained solution of acetate(s) and other components of the fertiliser of the present invention, from the decanted product. Preferably, said solution should be brought to room temperature prior to packaging.
VI. Reuse the product resulting from the insoluble part of the mixture, in the reactor's next operation, in order to make the method for obtaining the fertiliser more efficient.
*VII.* Modify the atmosphere during packaging by extracting oxygen from the container environment to avoid the spontaneous generation of *Mycoderma aceti.*

### EVIDENCE

The experiments were developed by Dr Carlos Alfonso López Orona at the Department of Agronomy Greenhouse at the Autonomous University of Sinaloa, located at kilometre 17.5 of the Culiacán-Eldorado highway, Culiacán, Sinaloa, which geographical coordinates are: 24°37'30.3"N 107°26'34.3"W

The greenhouse is a multi-tunnel greenhouse with transparent plastic and an anti-aphid mesh at the bottom.

An experimental design was carried out with a completely random distribution of treatments. The treatments were the following: A= conventional fertilisation and B = fertilisation with chelated liquid fertilisers.

Each treatment consisted of 10 plants as a useful experimental unit, with 5 repetitions, giving a total of 50 plants evaluated per treatment. **Treatment A.** Conventional fertilisation. Fertigation-grade soluble fertilisers were used: potassium nitrate, calcium nitrate, monoammonium phosphate, monopotassium phosphate, potassium sulphate, magnesium sulphate, ammonium sulphate and micronutrient mixture. The recommended dose for the area was used (Leal-Rodriguez personal communication 2020).

**Treatment B.** Fertilisation with acetates. Fertigation-grade soluble fertilisers were used: ammonium nitrate, potassium sulphate, ammonium sulphate, potassium sulphate, ammonium sulphate, monopotassium sulphate, micronutrient mixture and chelated calcium, potassium and magnesium fertilisers were added.

### YIELD COMPARISON

| Treatment | Observations | Minimum | Maximum | Mean | Standard deviation |
|---|---|---|---|---|---|
| Conventional | 10 | 25.400 | 199.770 | 124.190 | |
| 63.866 | | | | | |
| Chelates | | 10 | 87.300 | 220.400 | 140.801 |
| 47.950 | | | | | |

### WEIGHT COMPARISON

| Treatment | Observations | Minimum | Maximum | Mean | Standard deviation |
|---|---|---|---|---|---|
| Conventional Weight | 852 | 0.200 | 1.3 | 0.528 | 0.171 |
| Chelates Weight | 852 | 0.200 | 1.9 | 0.658 | 0.213 |

### TOMATO DEGREES BRIX

| Treatment | Observations | Minimum | Maximum | Mean | Standard deviation |
|---|---|---|---|---|---|
| Acetates | 913 | 1.00 | 7.5 | 5.30 | 1.436 |
| Conventional | 1155 | 0.50 | 7.1 | 4.59 | 1.208 |

While only some features of the invention have been illustrated and described herein, the persons skilled in the art will make many modifications and changes. Therefore, it should be understood that the attached claims are intended to cover all the modifications and changes that fall within the true spirit of the invention.

## Claims

1. A fertiliser compound for increasing the nutrient content required by plants, **characterised by** including the following components, in percentages by weight:
| | |
|---|---|
| • Potassium acetate ------ | 1.0 to 40.0%; |
| • Calcium acetate ------ | 1.0 to 40.0%; |
| • Magnesium acetate ------ | 1.0 to 40.0%; |
| • Iron acetate ------ | 1.0 to 40.0%; |
| • Zinc acetate ------ | 1.0 to 40.0%; |
| • Manganese acetate ------ | 1.0 to 40.0%; |
| • Copper acetate ------ | 1.0 to 40.0%; |
| • Potassium bicarbonate ------ | 0.01 to 0.05%; |
| • Calcium bicarbonate ------ | 0.01 to 0.05%; |
| • Magnesium bicarbonate ------ | 0.01 to 0.05%; |
| • Iron bicarbonate ------ | 0.01 to 0.05%; |
| • Zinc bicarbonate ------ | 0.01 to 0.05%; |
| • Manganese bicarbonate ------ | 0.01 to 0.05%; |
| • Copper bicarbonate ------ | 0.01 to 0.05%; |
| • Acetic acid ------ | 0.1 to 1.0%; |
| • Water ------ | 81.0 to 83.5%. |

2. A fertiliser compound for increasing the potassium content required by plants, **characterised by** including the following components, in percentages by weight:
| | |
|---|---|
| • Potassium acetate ------ | 8.0 to 40.0%; |
| • Potassium bicarbonate ------ | 0.01 to 0.05%; |
| • Acetic acid ------ | 0.5 to 1.0%; |
| • Water ------ | 58.0 to 83.5%; |

3. A fertiliser compound for increasing the calcium content required by plants, **characterised by** including the following components, in percentages by weight:
| | |
|---|---|
| • Calcium acetate ------ | 8.0 to 40.0%; |
| | |
|---|---|
| • Calcium bicarbonate ------ | 0.01 to 0.05% |
| • Acetic acid ------ | 0.5 to 1.0%; |
| • Water ------ | 58.0 to 83.5%. |

4. A fertiliser compound for increasing the magnesium content required by plants, **characterised by** including the following components, in percentages by weight:
| | |
|---|---|
| • Magnesium acetate ------ | 8.0 to 40.0%; |
| • Magnesium bicarbonate ------ | 0.01 to 0.05%; |
| • Acetic acid ------ | 0.5 to 1.0%; |
| • Water ------ | 58.0 to 83.5%. |

5. A fertiliser compound for increasing the iron content required by plants, **characterised by** including the following components, in percentages by weight:
| | |
|---|---|
| • Iron acetate ------ | 8.0 to 40.0%; |
| • Iron bicarbonate ------ | 0.01 to 0.05%; |
| • Acetic acid ------ | 0.5 to 1.0%; |
| • Water ------ | 58.0 to 83.5%. |

6. A fertiliser compound for increasing the zinc content required by plants, **characterised by** including the following components, in percentages by weight:
| | |
|---|---|
| • Zinc acetate ------ | 8.0 to 40.0%; |
| • Zinc bicarbonate ------ | 0.01 to 0.05%; |
| • Acetic acid ------ | 0.5 to 1.0%; |
| • Water ------ | 58.0 to 83.5%. |

7. A fertiliser compound for increasing the manganese content required by plants, **characterised by** including the following components, in percentages by weight:
| | |
|---|---|
| • Manganese acetate ------ | 8.0 to 40.0%; |
| • Manganese bicarbonate ------ | 0.01 to 0.05%; |
| • Acetic acid ------ | 0.5 to 1.0%; |
| • Water ------ | 58.0 to 83.5%. |

8. A fertiliser compound for increasing the copper content required by plants, **characterised by** including the following components, in percentages by weight:
| | |
|---|---|
| • Copper acetate ------ | 8.0 to 40.0%; |
| • Copper bicarbonate ------ | 0.01 to 0.05%; |
| • Glacial acetic acid ------ | 0.5 to 1.0%; |
| • Water ------ | 58.0 to 83.5%. |

9. A method for obtaining fertiliser for increasing the nutrient content required in plants, according to the preceding claims, **characterised by** including the following steps:
I. Mix natural stone of: potassium, and/or calcium, and/or iron, and/or zinc, and/or manganese and/or copper; and/or carbonate of: potassium, and/or calcium, and/or iron, and/or zinc, and/or manganese and/or copper; and/or oxysalts of: potassium, and/or calcium, and/or iron, and/or zinc, and/or manganese and/or copper, with water gradually, with continuous stirring, preferably at 400 RPM, cooling between 5 and 8°C. This operation can take up to 12 hours.
II. Add acetic acid (CH3COOH) or vinegar to the previous mixture, uniformly, preferably as droplets, with continuous stirring in order to achieve the reaction between the compounds to form acetate of potassium, and/or calcium, and/or iron, and/or zinc, and/or manganese and/or copper, and also to obtain carbon dioxide (CO₂). Preferably cool the mixture to between 5 and 8°C. Acetic acid or vinegar will be added until a pH between 4.6 and 4.8, preferably 4.7, is obtained.
III. Recirculate the carbon dioxide (CO₂) formed by the reaction between carbonate of potassium, and/or calcium, and/or magnesium, and/or iron, and/or zinc, and/or manganese, and/or copper with acetic acid or vinegar. The carbon dioxide produced is recirculated and incorporated into the reaction to form bicarbonate and thus increase the richness of the acetate.
IV. Decant or centrifuge the mixture obtained after the reaction for 24 hours. In this step, the carbonate of potassium, and/or calcium, and/or magnesium, and/or iron, and/or zinc, and/or manganese, and/or copper that did not react will precipitate to the bottom of the reactor and the acetate(s) obtained will remain in the form of a solution. According to the preferred method, the solution obtained is subject to the action of a vertical centrifuge to separate the suspended solids.
V. Collect the obtained solution of acetate(s) and other components of the fertiliser of the present invention, from the decanted product. Preferably, said solution should be brought to room temperature prior to packaging.
VI. Reuse the product resulting from the insoluble part of the mixture, in the reactor's next operation, in order to make the method for obtaining the fertiliser more efficient.
*VII.* Modify the atmosphere during packaging by extracting oxygen from the container environment to avoid the spontaneous generation of *Mycoderma aceti.*
